## Europäisches Patentamt

## European Patent Office

## Office européen des brevets

(11) Veröffentlichungsnummer: **0 300 193**
**A1**

# EUROPÄISCHE PATENTANMELDUNG

(21) Anmeldenummer: **88109514.5**

(22) Anmeldetag: **15.06.88**

(51) Int. Cl.⁴: **H04N 5/445 , H04N 7/20**

(30) Priorität: **18.07.87 DE 3723892**

(43) Veröffentlichungstag der Anmeldung:
**25.01.89 Patentblatt 89/04**

(84) Benannte Vertragsstaaten:
**AT BE CH DE ES FR GB IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Maier, Gerhard**
**Reutestrasse 19**
**D-7735 Dauchingen(DE)**
Erfinder: **Favreu, Jean-Claude**
**Am Mühlweiher 9**
**D-7730 VS-Tannheim(DE)**

(54) **Fernsehgerät mit integrierter Satelliten-Empfangseinheit.**

(57) Zur Nachrüstung von Fernsehgeräten für den Empfang von Satelliten Programmen sind Konverter bekannt, die über die vorhandene SCART-Buchse angeschlossen werden. Somit ist der übliche Bedienungskomfort über die Fernbedienung nicht möglich. Es können auch nicht Video-Recorder gleichzeitig betrieben werden. Diese Probleme zu lösen war die Aufgabe.

Nach der Erfindung wird diese Aufgabe für ein Fernsehgerät mit IR-Fernbedienung über Microprozessor mit je einem Tuner für terrestrische und Satelliten-Programme, die jeweils von einer zugeordneten PLL-Schaltung kontrolliert werden, dadurch gelöst, daß der eine Tuner über einen ENABLE 1- und der andere Tuner über einen ENABLE 2-Ausgang des Microprozessors geladen wird, daß beide Tuner durch entsprechende Aktivierung über den Microprozessor gleichzeitig parallel aktiviert werden und daß eine zusätzliche interne SCART-Buchse (2) vorhanden ist, die die Weitergabe des auf dem Bildschirm gewünschten Programmes zwecks Aufzeichnung erlaubt.

EP 0 300 193 A1

## Fernsehgerät mit integrierter SATELLITEN-Empfangseinheit.

Die Erfindung betrifft ein Fernsehgerät nach dem Oberbegriff des ersten Anspruchs.

Zur Nachrüstung vorhandener, normaler Fernsehgeräte für den Empfang von Satelliten-Fernsehprogrammen sind sogenannte TOP-SET-CONVERTER, das sind Konverter für solche SHF-Sendungen auf die 1. UHF-ZF bereits bekannt, die wie der Name sagt oben auf das Fernsehgerät gestellt und über die AV-Buchse verbunden werden. Ein solcher Konverter kann von einer eigenen PLL-Schaltung kontrolliert werden. Auch für den Einbau im Fernsehgerät vorgesehene Konverter sind bekannt, die Handabstimmung aufweisen (Voltage, Synthesizer, Potiabstimmung) und ebenfalls mit der Av-Buchse des Fernsehgerätes verbunden werden. Beide Lösungen befriedigen nicht hinsichtlich Bedienungskomfort, es kann nicht mit der vorhandenen Fernbedienung das Fensehgerät und der Sat.-Konverter kontrolliert werden und es ist nicht möglich gleichzeitig VCR-Betrieb vorzunehmen, d.h. es kann nicht gleichzeitig mit einem Video-Recorder aufgenommen werden.

Üblicherweise besitzen moderne Fernsehgeräte einen mit der IR-Fernbedienung zusammenwirkenden Microprozessor, der auch die PLL-Schaltung des Tuners für den Empfang terrestrischer Programme kontrolliert.

Der vorliegenden Erfindung lag deshalb die Aufgabe zugrunde, daß ein PLL-kontrollierter Satelliten-Tuner im Gerät derart integriert wird, daß ohne Änderung des vorhandenen Microprozessors dieser den Tuner für terrestrischen Sendungen und auch der Tuner für Satelliten-Sendungen steuert und daß mit der vorhandenen IR-Fernbedienung alle üblichen Funktionen einschließlich z.B. Suchlauf ausgelöst werden sollen, wobei außerdem gefordert war, daß gleichzeitiger VCR-Betrieb möglich ist.

Diese Aufgabe wird gemäß der Erfindung durch die im Anspruch 1 aufgeführten Merkmale gelöst. Weiterbildungen und Einzelheiten sind den weiteren Ansprüchen zu entnehmen.

Die nach der Erfindung nachrüstbare TV Sat-Einheit (Sat-Tuner + Konverter) für ein Fernsehgerät mit IR-Fernbedienung über Microprozessor ist so konzipiert, daß mit dem UHF-Datenwort des terrestrischen Fernsehempfangs die beiden Tuner-Einheiten für terrestrischen bzw. für Satelliten-Empfang, die beide von je einer PLL-Schaltung kontrolliert werden, geladen werden und mit dem am Microprozessor vorgesehenen SAT-Ausgang die Stromversorgung für die TV Sat-Einheit aktiviert wird und die Signale FBAS + Ton von der TV Sat-Einheit über einen Eingang (SCART 2-Buchse) in das Fernsehgerät eingekoppelt sind. Das terrestrische UHF-Signal ist ebenfalls vorhanden, wird aber durch die Steuerung der SCART 2-Buchse nicht in das Fernsehgerät gelangen. Die Oszillatorfrequenz der TV Sat-Einheit wird nun durch einen Frequenzteiler 1:2 geteilt und mittels seiner PLL-Schaltung und einer Quarzfrequenz ≥ 4,43 MHz von der PLL-Schaltung und durch das Datenwort von 14 bit so behandelt, als wenn es eine UHF-Frequenz wäre.

Wie das auch dem Funkschau-Artikel "Verteilanlagen für Satellitenprogramme", Heft 14/1987, Seiten 46 - 49 zu entnehmen ist, liefert ein Parabol-Spiegel für 11/12 GHz an seinem Ausgang eine 1. ZF mit 950 bis 1 750 MHz. Diese Eingangsfrequenz wird durch die übliche Mischung mit einer Oszillatorfrequenz von 1 430 bis 2 230 umgesetzt in eine 2. ZF von 479,5 MHz. Durch den nachfolgenden Frequenzteiler 1:2 wird daraus der UHF-Bereich 715 bis 1 115 MHz.

Einzelheiten der Erfindung sind der anhängenden Blockschaltung zu entnehmen und ergeben folgendes:

Mittels der ENABLE 1- und ENABLE 2-Ausgänge des Microprozessors werden die zwei PLL-Schaltungen unabhängig voneinander geladen, d.h. beide Tuner-Einheiten sind gleichzeitig voll in Funktion. An einer SCART 3-Buchse (extern) stehen immer die kompletten SAT-Basissignale, Video, Ton und Video-breitbandig für eine D2MAC-Dekoder zur Verfügung. An einer SCART 2-Buchse (intern) stehen die von SAT- und terrestrischen Programmen herrührenden Signale an. Deren Weiterleitung geschieht durch die SCART 2-Buchse gemäß Steuerung durch den Microprozessor. Eine SCART 1-Buchse (extern) liefert immer das auf dem Bildschirm des Fernsehgerätes dargebotene Programm. Hier können ein erster Video-Recorder oder ein zusätzlicher Monitor angeschlossen werden. An der SCART 3-Buchse ist der Anschluß eines zweiten Video-Recorders und/oder eines Descramblers für eine privaten TV Sat.- Sender möglich.

Zusammenfassend ergeben sich aus dem Vorstehenden die Schwerpunkte der Erfindung bzw. erzielte vorteilhafte Wirkungen:

Zwei Emfpangs-Einheiten, terrestrischer-Tuner und Satelliten-Tuner, sind vorhanden;

Beide Einheiten werden vom Microprozessor über jeweils eine von zwei unabhängigen PLL-Schaltungen mittels ENABLE 1 oder ENABLE 2 gesteuert;

Beide Einheiten sind gleichzeitig in Funktion, arbeiten parallel, wenn die SC-Taste (satellite channel) des Fernbedienungsgebers gedrückt wird.

Über SCART 2 wird das Sat.-Programm in das Fernsehgerät gespeist, wobei gleichzeitig das terrestrische Programm über SCART 1 (extern) mit einem Video-Recorder aufgezeichnet werden kann.

Dadurch, daß der Sat.-Tuner genauso arbeitet, als sei ein terrestrisches UHF-Programm angewählt, sind mit der Fernbedienung und dem Microprozessor, die beide nur einmal vorhanden sind, alle Manipulationen, die für terrestrischen Empfang möglich sind, auch für Sat.-Empfang möglich, nämlich Frequenz/Kanal-Suchlauf,± Feinverstimmung und Abspeicherung der Frequenzen.

Die vorhandene Möglichkeit der Auswahl L-Standard oder B/G-Standard (Umschaltungsmöglichkeit) wird zur Umschaltung zwischen H- und V-Polaristion benutzt und zwar entspricht die horizontale Polarisation dem L-Standard und die vertikale Polarisation dem B/G-Standard.

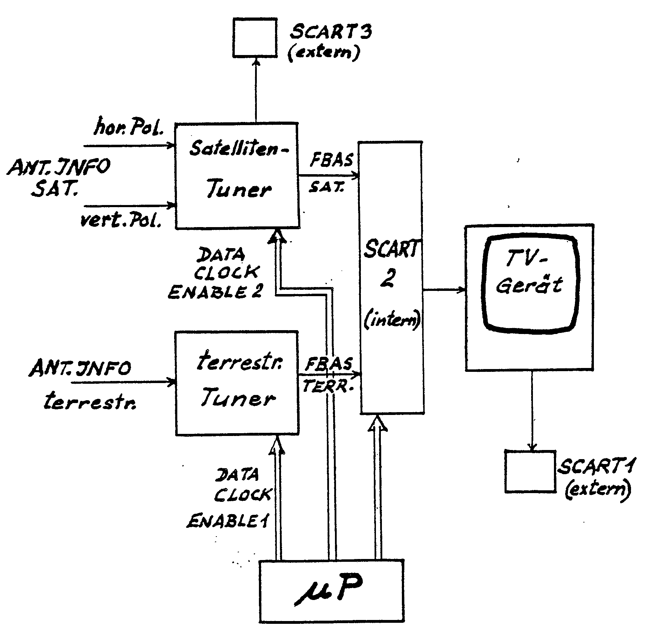

## Ansprüche

1. Fernsehgerät mit IR-Fernbedienung über Mikroprozessor mit je einem Tuner für terrestrische Programme und für Satelliten-Programme, jeweils von einer zugeordneten PLL-Schaltung kontrolliert, **dadurch gekennzeichnet**, daß der eine Tuner über einen ENABLE 1- und der andere Tuner über eine ENABLE 2-Ausgang eines einzigen Microprozessors geladen wird, um die unterschiedlichen Empfangsfrequenzen zu verarbeiten, und daß beide Tuner durch entsprechende Aktivierung über einen Microprozessor gleichzeitig parallel betrieben werden, um dadurch gleichzeitig und wahlweise die Wiedergabe eines Programmes auf dem Bildschirm des Fernsehgerätes und die Aufzeichnung eines anderen Programmes mittels eines Video-Recorders zu ermöglichen, und daß hierzu eine zusätzliche interne SCART-Buchse (SCART2) vorhanden ist, die die Weitergabe des auf dem Bildschirm gewünschten Programmes erlaubt.

2. Fernsehgerät nach Anspruch 1, **dadurch gekennzeichnet**, daß im Satelliten-Tuner vor seinem Oszillator-Ausgang ein Frequenzteiler 1:2 und ein Quarz für die Satelliten-PLL-Schaltung mit einer Frequenz $\geq$ 4,43 MHz gewählt ist, um mit den heute vorhandenen PLL-Schaltungen mit 14 bit DATENWORT den Satelliten-Empfänger (-Tuner) so steuern zu können, als wenn es eine terrestrische UHF-Frequenz wäre, so daß mit einem Microprozessor alle Manipulationen, die für den terrestrischen Empfang möglich sind, wie Frequenz/Kanal-Suchlauf, + Feinverstimmung und Abspeicherung gewählter Frequenzen, ebenso für den TV SAT-Empfang möglich sind.

3. Fernsehgerät nach Anspruch 1, mit Schaltmitteln zur Auswahl des L-Standard oder B/G-Standard, **dadurch gekennzeichnet**, daß diese als Umschalteinrichtung zur Polarisationsumschaltung benutzt wird und zwar die eine Standard-Information für horizontale Polarisation und die andere Standard-Information für vertikale Polarisation.

T-PA 701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 015 797 (SCART) <br> * Seite 1, Zeilen 1-6; Seite 2, Zeilen 16-20; Seite 3, Zeilen 3-11; Seite 11, Zeilen 27-29; Seite 15, Zeile 29 – Seite 17, Zeile 6; Figuren 5,7 * <br> --- | 1 | H 04 N 5/445 <br> H 04 N 7/20 |
| A | DE-A-2 407 502 (STANDARD ELEKTRIK LORENTZ) <br> * Insgesamt * <br> --- | 1,2 | |
| A | EP-A-0 196 607 (TOSHIBA) <br> * Insgesamt * <br> --- | 1-3 | |
| A | EP-A-0 189 012 (NORDSPACE) <br> ----- | | |

|  | RECHERCHIERTE SACHGEBIETE (Int. Cl.4) |
|---|---|
|  | H 01 Q <br> H 03 J <br> H 04 B <br> H 04 N |

Der vorliegende Recherchenbericht wurde für alle Patentansprüche erstellt

| Recherchenort | Abschlußdatum der Recherche | Prüfer |
|---|---|---|
| DEN HAAG | 24-10-1988 | KLUZ F.M. |